## Europäisches Patentamt

## European Patent Office

## Office européen des brevets

(11) Veröffentlichungsnummer : **0 372 028 B1**

(12) **EUROPÄISCHE PATENTSCHRIFT**

(45) Veröffentlichungstag der Patentschrift :
**03.03.93 Patentblatt 93/09**

(51) Int. Cl.$^5$ : **C09C 1/20**

(21) Anmeldenummer : **89904808.6**

(22) Anmeldetag : **23.02.89**

(86) Internationale Anmeldenummer :
**PCT/EP89/00167**

(87) Internationale Veröffentlichungsnummer :
**WO 89/08131 08.09.89 Gazette 89/21**

(54) **VERBESSERTE CHROMGELB- UND MOLYBDATROT-PIGMENTE - VERFAHREN ZU IHRER HERSTELLUNG UND IHRE VERWENDUNG.**

(30) Priorität : **26.02.88 DE 3806214**

(43) Veröffentlichungstag der Anmeldung :
**13.06.90 Patentblatt 90/24**

(45) Bekanntmachung des Hinweises auf die
Patenterteilung :
**03.03.93 Patentblatt 93/09**

(84) Benannte Vertragsstaaten :
**DE FR**

(56) Entgegenhaltungen :
**GB-A- 2 023 157
Chemical Abstracts, bol. 100, no. 22, 28 May
1987 (Columbus, Ohio, US), see page 89, abstract no. 176552d**

(73) Patentinhaber : **DR. HANS HEUBACH GMBH &
CO KG
Postfach 1160
W-3394 Langelsheim (DE)**

(72) Erfinder : **RESSLER, Ingrid
Untere Mühlenstrasse 2
W-3380 Goslar (DE)**
Erfinder : **ADRIAN, Gerhard
Talstr. 20 A
W-3380 Goslar (DE)**
Erfinder : **HORN, Walter
Spanntalstrasse 22
W-3394 Langelsheim (DE)**

(74) Vertreter : **Müller-Boré & Partner
Patentanwälte
Isartorplatz 6 Postfach 26 02 47
W-8000 München 2 (DE)**

## Beschreibung

Die Erfindung betrifft verbesserte Chromgelb- und Mobybdatrotpigmente und davon insbesondere die Bleichromat-Pigmente auf der Basis der nach dem Colours Index, 3. Auflage 1971, deklarierten Produkte

|  |  |  |
|---|---|---|
| Bleichromat, | C.I. Pigment Yellow 34, CONST. NO. 77600, |  |
| Bleisulfochromat, | C.I. Pigment Yellow 34, CONST. NO. 77603 |  |
| und Bleichromat-Bleimolybdat, teils mit Bleisulfat | C.I. Pigment Red 104, CONST. NO. 77605, |  |

Verfahren zur Herstellung der verbesserten Chromgelb- bzw. Mobylatrot-Pigmente sowie deren Verwendung in Beschrichtungsstoffen und Kunststoffen.

In der Patentliteratur sin eine Vielzahl von Verfahren beschrieben, um die Echtheitseigenschaften dieser Chromgelb- und Mobybdatrot-Pigmente zu verbessern.

So können durch die Auffällung von Kieselsäure bsw. Silikat und/oder den verschiedensten unlöslichen Metallhydroxiden Wetter- und Lichtechtheiten verbessert werden. Eine besonders deutliche Verbesserung der Licht- und Wetterechtheit von Chromgelb- und Molybdatrot-Pigmententen erreicht man durch die Auffällung von 3-wertigen Antimonoxid wie sie in der DE-PS 12 24 858 beschrieben ist. Durch die Verwendung der 3-wertigen Antimonverbindung erfolgt an der Oberfläche der Pigmentteilchen eine partielle Reduktion von Chrom(VI) zu Chrom (III), was offensichtlich zu einer Stabilisierung der Pigmentoberfläche und Verbesserung der Licht- und Wetterechtheit solcher Pigmente führt. Nachteilig ist, daß durch das Ensthen der 3-wertigen grünen Chromverbindung die Farbbrillanz vermindert wird.

In der DE-PS 12 53 384 werdens als Stabilisierungskomponenten Antimon-3-Verbindungen und lösliche Salze der Kieselfluorwasserstoffsäure oder wasserlösliche Salze, die Antimon-III-Ionen, Fluorionen und Silikationen enthalten, vorgeschlagen, um die Beständigkeit von Molybdatrot- zw. Molybdatorange-Pigmenten gegen schweflige Säure zu verbessern.

Die DE-PS 27 06 545 und 27 35 867 befassen sich mit der Verbesserung der $SO_2$-Beständigkeit von Bleichromat-Pigmenten durch Auffällen von Zinkmetaphosphat bzw. Cermetaphosphat, wobei eine $SO_2$-Beständigkeit nach DIN 50 018 (Kesternich) von max. 5 Cyclen erreicht wird.

Durch diese Maßnahmen war es jedoch nicht möglich, auch die Hitzestabilität, beispielsweise bei der Verarbeitung dieser Pigmente in Kunststoffsystemen, so zu verbessern, daß kein wesentliches Nachdunkeln der Pigmente erfolgt.

Methoden zur Verbesserung der Chromatpigmente im Hinblick auf die Temperaturbeständigkeit gehen zurück auf die US- PS 33 70 971 entsprechend DE-PS 15 92 943. Es wird dort vorgeschlagen, eine homogene, amorphe Silikatscicht von 2 - 40 %, ausgehend von einer wäßrigen Natriumsilikatlösung, Neutralisieren bzw. Ausfällen des $SiO_2$ mit einer verdünnten Schwefelsäure, aufzubringen, wobei nachfolgend noch eine Schicht von bis zu 2 Gew.% Aluminiumoxid aufgebracht wird.

Dieses Verfahren wurde mehrfach modifiziert, wobei, wie in der DE-PS 18 07 891 und in der US-PS 36 39 133 beschrieben, die Verwendung eines Hochdruckhomogenisators empfohlen wird, der durch große Scherkräfte für eine Dispergierung des Pigmentes in Primärteilchen vor der Auffällung des Schutzüberzugs sorgt, und auf diese Weise eine sehr gleichmäßige Verteilung des Schutzüberzugs auf den einzelnen Pigmentteilchen erreicht wird.

In den DE-OS 19 52 537 und 19 52 538 sind Verfahren beschrieben zur Behandlung von Bleichromat-Pigmenten, die bis zu 175 °C temperaturstabil sind.

Nach der US-PS 37 98 045 werden mit Antimon-, Zinn- oder Manganverbindungen anreduzierte Pigmente für die Beschichtung mit dichter amorpher Kieselsäure und Aluminiumoxid vorgeschlagen, wobei Endprodukte erhalten werden mit sehr guter Lichtechtheit und Temperaturbeständigkeit. Der Nachteil dieser Pigmente ist, daß sie durch die Anreduzierung, d.h. partielle Umwandlung von Cr(VI) zu Cr(III), deutlich an Farbbrillanz eingebüßt haben.

Die US-PS 40 17 328 sieht die Zugabe von geringen Menger $SiO_2$ und Metallhydroxid vor der eigentlichen Fällung und Überziehen dieser Grundpigmente nach bekannten Verfahren (US-PS 33 70 971) mit einem Überzug aus dichter amorpher Kieselsäure und Aluminiumoxid vor. Die auf diese Weise erhaltenen Pigmente sollen eine gute Lichtechtheit, Chemikalienbeständigkeit und Temperaturbeständigkeit aufweisen. Zur Stabilisierung des Grundpigmentes nach US-PS 40 17 328 wird neben den Hydroxiden anderer Metalle auch das von Antimon empfohlen.

Wie bereits erwähnt, werden zur Herstellung der sogenannten anreduzierten (pre-darkened) Chromatpig-

2

mente Antimon(III)-Verbindungen verwendet. Durch die Anreduzierung erhält man jedoch von vornherein schmutzige und nicht farbklare Chromatpigmente, was zu einer Beeinträchtigung der Farbbrillanz dieser Pigmente führt.

Außerdem zeigte sich, daß nach den bekannten Verfahren keine Pigmente erhalten werden konnten, die neben guten Echtheitseigenschaften und hoher Farbbrillanz auch die Forderung nach extremniedrigen säurelöslichen Bleianteilen nach DIN/ISO 6713 von $\leqq 0,5$ % erfüllen.

Aufgabe der Erfindung ist daher die Herstellung von temperaturstabilen und farbbrillanten Chromgelb- und Molybdatrotpigmenten, vor allem Bleichromat- und Bleimolybdat-Pigmenten mit sehr hohen Echtheitseigenschaften bei der Einwirkung von Temperatur, Licht, Säuren und Alkalien sowie auch mit extrem niedrigen säurelöslichen Bleianteilen nach DIN/ISO 6713 von $\leqq 0,5$ %. Diese Aufgabe konnte erfindungsgemäß dadurch gelöst werden, daß die Chromgelb- oder Molybdatrotpigmente, insb. die eingangs durch die C.I. bzw. CONST. No. definierten Pigmente, nach Anstabilisierung mit geringen Alkalisilikat- und/oder Metallhydroxidmengen auf der Basis der Metalle Aluminium, Titan, Mangan, Cer oder anderer hierfür geeigneter Metalle zunächst nach bekannten Verfahren, wie sie in den US-PSen 3370791, 4017328 und 4059459 beschrieben sind, mit einem Überzug aus dichter amorpher Kieselsäure mit 2 - 40 Gew.-% $SiO_2$ unter Anwendung von Schwefelsäure versehen und erfindungsgemäß mit 0,1 - 10 Gew.-%, vorzugsweise 2-5 Gew.-% Antimonoxid und zusätzlich 0,1 - 10 Gew.-%, vorzugsweise 1-3 Gew.-% Kieselsäure umhüllt werden. Die Auffällung der $Sb_2O_3/SiO_2$-Schichten kann auch in mehreren Stufen erfolgen. Daran anschließend werden noch 0,1 - 10 Gew.-%, vorzugsweise 0,1 - 3 Gew.-% Aluminiumoxid und/oder 0,1 - 10 Gew.-%, vorzugsweise 2 - 4 Gew.-% Erdalkalipolyphosphate auf der Basis kettenförmig kondensierter Polyphosphate durch Zugaben entsprechender gelöster Erdalkalisalze sowie löslicher Polyphosphate aufgefällt. Durch die Zugabe dieser Metallsalzlösungen bzw. der darauf folgenden Auffällung wird eine Flockulation und Stabilisierung der Silikat/Metall/Silikatschichten bewirkt, was sich vorteilhaft auf die Widerstandsfähigkeit der Umhüllungskomponenten gegen Fremdeinflüsse auswirkt. Auch die Filtrationseigenschaften der Pigmente werden durch diese Nachbehandlung verbessert.

Durch das erfindungsgemäße Verfahren lassen sich temperaturstabile und farbbrillante Chromgelb- und Molybdatrotpigmente, insbesonder Bleichromat-, Bleisulfochromat- und Molybdatrot-Pigmente herstellen, die sich durch sehr hohe Echtheiten und Beständigkeiten bei der Einwirkung von Hitze, Wetter, Licht, Säuren und Alkalien auszeichnen. So konnte insbesondere die Temperaturbeständigkeit gegenüber den nach den US-PS 36 39 133, 37 98 045 und 40 17 328 bzw. 40 59 459 erhaltenen Produkten nach erheblich verbessert werden. Besonders bemerkenswert ist die Tatsache, daß diese Pigmente mit der verbesserten Temperaturbeständigkeit sich durch hohe Farbbrillanz auszeichnen, wie sie sonst bei mit Antimonoxiden stabilisierten Bleichromat-Pigmenten nicht vorhanden ist. Wie schon erwähnt, konnte die Säurelöslichkeit nach DIN/ISO 6713 durch das erfindungsgemäße Verfahren bis auf < 0,5 % Pb vermindert werden. Im Kesternicht-Test zur Überprüfung der $SO_2$-Beständigkeit wurden mit den erfindungsgemäß hergestellten Pigmenten bis über 10 Zyklen erreicht, ohne daß sich der Fabton einer Alkyd-Melaminbeschichtung merklich veränderte. Bei den nach den US-PS 36 39 133, 39 29 500, 37 98 045 und 40 17 328 bzw. 40 59 459 hergestellten Pigmenten konnten dagegen nur 3 - 4 Zyklen ohne Farbtonveränderung (DE < 3, s. Tab. 1) erreicht werden.

Die deutliche Verbesserung der Echtheitseigenschaften und Verminderung der säurelöslichen Bleianteile nach DIN/ISO 6713 wird mit zurückgeführt auf eine durch das erfindungsgemäße Verfahren erreichte Verdichtung der Metall/Kieselsäureschichten auf den Pigmentteilchen, was man an elektronenmikroskopischen Aufnahmen deutlich feststellen kann. Elektronenmikroskopische Aufnahmen mit 225 000-fachen Vergrößerungen (Elektronenmikroskop JOEL 200 KV) zeigen deutlich die dichtere, kompaktere Umhüllung der erfindungsgemäßen Pigmentteilchen gegenüber den bekannten Pigmentteilchen mit üblicher $SiO_2$-Beschichtung.Offenbar erfolgt eine synergistische Wirkung durch die erfindungsgemäße Behandlung.

Die folgenden Beispiele erläutern die Erfindung:

Beispiel 4

200 g eines Bleisulfochromat-Pigmentes, entsprechend C.I. Pigment Yellow 34, CONST. NO. 77 603, welches in üblicher bekannter Weise, z.B. gemäß US-PS 33 70 971 mit geringen Mengen Alkalisilikat und/oder Metalloxiden anstabilisiert wurde, werden in 3 1 Wasser aufgeschlämmt und unter Zusatz von 20 g Natronwasserglas mit 27 % $SiO_2$ (1 : 10 in Wasser) in einem Hochdruckhomogenisator zur Zerteilung der Agglomerate dispergiert. Die erhaltene Suspension wird auf 80°C aufgeheizt und 80 g Natronwasserglas mit 27 % $SiO_2$ (1 : 10 in Wasser) während 5 Stunden zulaufen gelassen. Während dieser Zeit wird der pH-Wert mit verdünnter Schwefelsäure (1 : 50) auf 9,5 gehalten.

Danach wird der pH-Wert auf 8,0 abgesenkt und 24 g einer 25 Gew.-%igen Antimonchloridlösung zugegeben, wobei der pH-Wert mit Natriumcarbonatlösung (1 : 10) auf 6,0 gehalten wird. Nach 30 Minuten Nachrühren wird eine Lösung von 4 g Natronwasserglas mit 27 % $SiO_2$ (1 : 10 in Wasser) zulaufen gelassen, wobei sich ein pH-Wert von 7,5 einstellt.

Die Nachbehandlung erfolgt mittels einer Lösung von 17 g Bariumchlorid (1 : 20 in Wasser) und nachfolgenden Zusatz von 8 g eines kettenförmig kondensierten löslichen Polyphosphats (1 : 10 in Wasser). Der End-pH-Wert soll 7,5 betragen.

Die Aufarbeitung des beschichteten Pigmentes erfolgt durch Filtration, Salzfreiwaschen, Trocknen bei 100°C und Vermahlen mit den üblichen Mahlaggregaten.

Beispiel 5

Das gleiche Bleisulfochromat-Pigment wie in Beispiel 4 in einer Menge von ebenfalls 200 g wurde in der gleichen Weise behandelt wie in Beispiel 4 beschrieben, wobei die Stabilisierung mit Antimonoxid in folgender Weise modifiziert wurde. Zu der auf pH 8 eingestellten Suspension wurden 12 g einer 25 Gew.-%igen Antimonchloridlösung gegeben, wobei ein pH-Wert von 6 durch Zugabe von Natriumcarbonatlösung gehalten wurde. Nach 30-minütiger Nachrührzeit erfolgte die Zugabe von 2 g Natronwasserglas in 20 ml Wasser bis pH 7,3 (also die halbe Menge wie in Beispiel 4). Der Vorgang wurde dann in einer zweiten Stufe mit gleichen Mengen Antimonchloridlösung und Natronwasserglaslösung wiederholt und nach 30-minütiger Nachrührzeit mit einer Lösung von 7 g Aluminiumsulfat in 70 ml Wasser nachbehandelt. Der End-pH-Wert wurde mit 10%iger Natriumcarbonatlösung auf 7,5 eingestellt.

Die Aufarbeitung erfolgte wie in Beispiel 4 beschrieben.

Es wurden temperaturstabile Chromgelb-Pigmente erhalten mit hoher Farbbrillanz, sehr niedrigen säurelöslichen Bleianteilen nach DIN/ISO 6713 und sehr hohen anderen Echtheitseigenschaften.

(1) Produkt des Beispiels 1 der vorliegenden Erfindung

(2) Produkt des Beispiels 2 der vorliegenden Erfindung (mit Aluminiumsulfat-Nachbehandlung)

(3) Bleisulfochromat mit 4 Gew.-% $Al_2O_3$, 20 Gew.-% $SiO_2$, 2 Gew.-% $Al_2O_3$, hergestellt gemäß US-PS 40 59 459

(4) Bleisulfochromat, stabilisiert mit 4 Gew.-% $SiO_2$ / 4 Gew.-% $Sb_2O_3$, hergestellt gemäß DE-PS 12 24 858.

Tabelle 1

|  | (0) | (1) | (2) | (3) | (4) |
|---|---|---|---|---|---|
| Säurelösliches Pb nach DIN/ISO 6713 | 8,5 % | 0,15 % | 0,2 % | 3,8 % | 3,0 % |
| Kesternich-Test nach DIN 50 018, 2 1 SO$_2$, bis zur Farbdifferenz DE < 3 Zeiss RFC 3, Normlichtart D 65 |  |  |  |  |  |
| Alkyd-Melamin-Einbrennlack, 30%ig pigmentiert |  |  |  |  |  |
| Prüfzyklen | 2 | 12 - 14 | 11 - 13 | 3 - 4 | 8 - 10 |
| Farbton Vergleichsstandard (0)-Probe |  |  |  |  |  |
| Alkyd-Melamin-Einbrennlack, 30%ig pigmentiert |  |  |  |  |  |
| Farbdifferenz DE Zeiss RFC 3, Normlichtart D 65 | - | 1,2 | 0,9 | 0,7 | 5,7 |
| Lichtechtheit Vergleich jeweils zum unbelasteten Anstrichfilm |  |  |  |  |  |
| Alkyd-Melamin-Einbrennlack, 30%ig pigmentiert |  |  |  |  |  |
| Xenotest-Bewitterung 500 Std., |  |  |  |  |  |
| Farbdifferenz DE Zeiss RFC 3, Normlichtart D 65 | 4,1 | 2,6 | 2,3 | 3,6 | 2,8 |
| Temperaturbeständigkeit Vergleich jeweils zur Ausgangsprobe nach Belastung 250 °C, 30 sek. |  |  |  |  |  |
| Hochdruckpolyäthylen, 2%ige Pigmentierung, Einarbeitung mittels Spritzguß-Plastifizierschnecken, Verweilzeit 5 min, Temperatur 320 °C |  |  |  |  |  |
| Farbdifferenz DE Zeiss RFC 3, Normlichtart D 65 | 15,2 | 2,1 | 1,9 | 4,2 | 9,0 |

5

Beispiel 3

200 g eines Molybdatrot-Pigmentes entsprechend C.I. Pigment Red 104 (CONST. NO. 77 605) wird zunächst in üblicher bekannter Weise (US-PS 40 59 459 oder DE-PS 12 24 858) mit Alkalisilkat und/oder Metalloxid anstabilisiert. Danach wurde filtriert und salzfrei gewaschen. Der salzfreie Pigmentschlamm wird in 3 1 Wasser aufgeschlämmt und unter Zusatz von 20 g Natronwasserglas mit 21 % $SiO_2$ (1 : 10 in Wasser ) in einem Hochdruckhomogenisator zur Zerteilung der Agglomerate dispergiert. Die erhaltene Suspension wird auf 85 °C aufgeheizt und 70 g Wasserglas mit 21 % $SiO_2$ (1 : 10 in Wasser) während 5 Stunden zulaufen gelassen.

Der pH-Wert wird mit verdünnter Schwefelsäure (1 : 50) auf 8,0 eingestellt und 24 g einer 25 Gew. -%igen Antimonchloridlösung zugegeben, wobei der pH-Wert mit Natriumcarbonatlösung (1 : 10 ) auf 6,0 gehalten wird. Nach 30 Minuten Nachrühren wird der pH-Wert mit einer Lösung von 4 g Natronwasserglas (1 : 10) auf pH 7,5 eingestellt und 7 g Aluminiumsulfat (1 : 10) zugegeben.

Es erfolgte die übliche Aufarbeitung durch Filtration, Salzfreiwaschen, Trocken bei 100 °C und Vermahlen mit den Üblichen Mahlaggregaten.

Das erhaltene Molybdatrot-Pigment zeichnete sich durch Temperaturbeständigkeit bis 320 °C, hohe Farbbrillanz, sehr niedrige säurelösliche Bleianteile nach DIN/ISO 6713 und sehr hohe andere Echtheitseigenschaften aus.

Das erfindungsgemäß herstellte Molybdatrot-Pigment (01) wurde unter Verwendung der nach Beispiel 1 und 2 aufgeführten Prüfparameter mit folgenden Pigmenten verglichen:

(00) handelsübliches Molybdatrot-Pigment, mittelstabilisiert

(01) Produkt des vorliengenden Biespiel 3

(03) Molybdatrot-Pigment mit 20 Gew. % $SiO_2$ u. 2 Gew.% $Al_2O_3$, hergestellt gemäß US-PS 40 59 459

(04) Molybdatrot-Pigment, stabilisiert mit 4 Gew. % $SiO_2$ u. 4 Gew. % $Sb_2O_3$, hergestellt gemäß DE-PS 12 53 384.

Tabelle 2

|  | (00) | (01) | (03) | (04) |
|---|---|---|---|---|
| **Säurelösliches Pb** nach DIN/ISO 6713 | 7,9 % | 0,25 % | 5,6 % | 4,2 % |
| **Kesternich-Test** nach DIN 50 018, 2 1 SO$_2$, bis zur Farbdifferenz DE < 3 Zeiss RFC 3, Norm- lichtart D 65 |  |  |  |  |
| Alkyd-Melamin- Einbrennlack, 20%ig pigmentiert |  |  |  |  |
| Prüfzyklen | 2 | 11 - 13 | 3 - 4 | 7 - 10 |
| **Farbton** Vergleichsstandard (0)-Probe |  |  |  |  |
| Alkyd-Melamin- Einbrennlack, 20%ig pigmentiert |  |  |  |  |
| Farbdifferenz DE Zeiss RFC 3, Norm- lichtart D 65 | - | 0,9 | 0,6 | 3,2 |
| **Lichtechtheit** Vergleich jeweils zum unbelasteten Anstrichfilm |  |  |  |  |
| Alkyd-Melamin- Einbrennlack, 20%ig pigmentiert |  |  |  |  |
| Xenotest-Bewitterung 500 Std., |  |  |  |  |
| Farbdifferenz DE Zeiss RFC 3, Norm- lichtart D 65 | 6,2 | 2,4 | 3,9 | 3,2 |
| **Temperaturbeständigkeit** Vergleich jeweils zur Ausgangsprobe nach Be- lastung 250 °C, 30 sek. |  |  |  |  |
| Hochdruckpolyäthylen, 2%ige Pigmentierung, Einarbeitung mittels Spritzgußplastifizier- schnecken, Verweilzeit 5 min, Temperatur 320 °C |  |  |  |  |
| Farbdifferenz DE Zeiss RFC 3, Norm- lichtart D 65 | 13,8 | 2,7 | 4,4 | 10,1 |

7

**Patentansprüche**

1. Verfahren zur Herstellung von temperatur- und lichtstabilen Chromgelb- und Molybdatrot-Pigmenten, bei dem auf ein Chromgelb- bzw. Molybdatrot-Pigment mindestens einmal eine Kieselsäure gefolgt von einer Antimonoxidschicht aufgebracht wird, dadurch gekennzeichnet, daß zur Erhöhung der Farbbrillanz, der $SO_2$-Beständigkeit sowie der Echtheitseigenschaften bei Einwirkung von Temperatur, Licht, Wetter, Alkalien und Säuren, und zur Erniedrigung der säurelöslichen Bleianteile auf ein in üblicher Weise mit Metalloxiden und/oder Kieselsäure vorstabilisiertes Chromgelb- bzw. Molybdatrot-Pigment die Kieselsäureschicht in Form einer dichten amorphen Kieselsäurehülle mit einem, jeweils auf Trockergewicht des Endproduktes bezogenen Gehalt an 2 bis 40 Gew.-% $SiO_2$ aufgebracht wird, danach eine oder mehrere Antimonoxid/Kieselsäureschichten mit einem Gehalt an 0,1 bis 10 Gew.-% $Sb_2O_3$ und 0,1 bis 10 Gew.-% $SiO_2$ aufgebracht werden und abschließend 0,1 bis 10 Gew.-% Aluminiumoxid und/oder 0,1 bis 10 Gew.-% Erdalkalipolyphosphat aufgefällt wird.

2. Verfahren nach Anspruch 1, dadurch gekennzeichnet, daß als Ausgangsmaterial ein in üblicher bekannter Weise mit Metalloxiden und Kieselsäure vorstabilisiertes Chromgelb-bzw. Molybdatrot-Pigment verwendet und dieses salzfrei gewaschen wird und dann der feuchte Pigmentschlamm für die Aufbringung der dichten amorphen Silikathülle verwendet wird, worauf die Antimonoxid-/Kieselsäurehülle aufgebracht und abschließend Oxide mehrwertiger Metalle und/oder Erdalkalipolyphosphat aufgebracht wird.

3. Verfahren nach Anspruch 1, dadurch gekennzeichnet, daß das salzfrei gewaschene, in üblicher Weise mit Metalloxiden und Kieselsäure vorstabilisierte Chromgelb-oder Molybdatrot-Pigment filtriert, salzfrei gewaschen und getrocknet und danach das Trockenpigment nach erneuter Aufschlämmung und Dispergierung mit einer dichten amorphen Kieselsäurehülle versehen wird und danach Antimonoxid und Kieselsäure in einer oder mehreren Stufen aufgefüllt wird mit abschließender Auffällung von Metalloxiden und/oder Erdalkalipolyphosphaten.

4. Verfahren nach Anspruch 1-3, dadurch gekennzeichnet, daß für die Aufbringung der dichten amorphen Silikathülle 5-25 Gew.-% $SiO_2$, für die in einer oder mehreren Stufen aufzubringende Antimonoxid-/Kieselsäureschicht 2-5 Gew.-% $Sb_2O_3$ und 1-3 Gew.-% $SiO_2$ sowie für die abschließende Aufbringung von Aluminiumoxid 0,1-3 Gew.-% $Al_2O_3$ und/oder 2-4 Gew.-% Erdalkalipolyphosphat zur Anwendung kommen.

5. Verfahren nach Anspruch 1-3, dadurch gekennzeichnet, daß für die Aufbringung der dichten amorphen Silikathülle ca. 20 Gew.-% $SiO_2$, für die in einer oder mehreren Stufen aufzubringende Antimon-/Kieselsäureschicht ca. 4 Gew.-% $Sb_2O_3$ und ca. 2 Gew.-% $SiO_2$ sowie für die abschließende Auffällung ca. 2 Gew.-% $Al_2O_3$ und/oder 3 Gew.-% Erdalkalipolyphosphat angewendet werden.

6. Verfahren nach Anspruch 1-3 und 5, dadurch gekennzeichnet, daß für die abschließende Behandlung mit Erdalkalipolyphosphaten Calcium- und/oder Bariumpolyphosphate auf der Basis kettenförmig kondensierter Polyphosphate verwendet werden, die durch Zugabe wässriger Lösungen von Erdalkalisalzen und Phosphaten ausgefällt werden.

7. Temperaturstabile und farbbrillante Chromgelb- und Molybdatrotpigmente mit sehr hohen Echtheitseigenschaften bei Einwirkung von Licht, Wetter, Alkalien und Säuren, hoher $SO_2$-Beständigkeit sowie stark erniedrigten säurelöslichen Bleianteilen, dadurch gekennzeichnet, daß sie außer den üblichen Stabilisierungskomponenten aus Metalloxiden und/oder Kieselsäure eine dichte amorphe Silikathülle in einer Menge von 2-40 Gew.-%, eine oder mehrere Antimonoxid/Kieselsäureschichten in einer Menge von jeweils 0,1-10 Gew.-%, vorzugsweise 2-5 Gew.-% $Sb_2O_3$ und 0,1-10 Gew.-%, vorzugsweise 1-3 Gew.-% $SiO_2$ sowie eine abschließende Hülle aus Aluminiumoxid in einer Menge von 0,1 bis 10 Gew.-%, vorzugsweise von 0,1-3 Gew.-% $Al_2O_3$ und/oder eine Erdalkalipolyphosphatschicht in einer Menge von 0,1-10, vorzugsweise 2-4 Gew.-% Erdalkaliphosphat aufweisen.

8. Verwendung der temperaturstabilen und farbbrillanten Chromgelb- und Molybdatrot-Pigmente nach Anspruch 7 zur Pigmentierung von Kunststoffen, insbesondere Beschichtungsstoffen und Formmassen.

## Claims

1. A process for the production of temperature and light-stable chrome yellow and molybdate red pigments, in which a silicic acid layer followed by an antimony oxide layer are applied at least once on a chrome yellow or molybdate red pigment,
wherein the silicic acid layer is applied in the form of a dense amorphous silicic-acid covering having a content of 2 to 40 % by mass of $SiO_2$, based in each case on the dry mass of the end product, to a chrome yellow or molybdate red pigment which is prestabilized in the usual manner using metallic oxides and/or silicic acid to increase the color brilliance, $SO_2$ resistance as well as fastness properties under the influence of temperature, light, weather, alkalis and acids and to reduce the acid-soluble lead portions, thereafter one or more antimony oxide/silicic acid layers having a content of 0.1 to 10 % by mass of $Sb_2O_3$ and 0.1 to 10 % by mass of $SiO_2$ are applied, and subsequently 0.1 to 10 % by mass of aluminum oxide and/or 0.1 to 10 % by mass of alkaline earth polyphosphate are applied.

2. A process according to Claim 1, wherein a chrome yellow or molybdate red pigment which is prestabilized in the usual known manner using metallic oxides and silicic acid is used as starting material, the said pigment is then washed to be salt-free, and then the moist pigment slurry is used for applying the dense amorphous silicate covering, whereupon the antimony oxide/silicic acid covering is applied, and finally oxides of polyvalent metals and/or alkaline earth polyphosphate is/are applied.

3. A process according to Claim 1, wherein the chrome yellow or molybdate red pigment, which is washed to be salt-free and which is prestabilized in the usual manner using metallic oxides and silicic acid, is filtered, washed to be salt-free and dried and, thereafter, the dry pigment, having again been placed in suspension and dispersed, is provided with a dense amorphous silicic-acid cover and thereafter antimony oxide and silicic acid are applied in one or more stages with a final coating of metallic oxides and/or alkaline earth polyphosphates.

4. A process according to any one of Claims 1 to 3 inclusive, wherein, for the application of the dense amorphous silicate cover, 5 - 25 % by mass of $SiO_2$ is used; for the antimony oxide/silicic acid layer to be applied in one or more stages, 2 - 5 % by mass $Sb_2O_3$ and 1 - 3 % by mass of $SiO_2$ is used; and for the final application of aluminum oxide 0.1 - 3 % by mass of $Al_2O_3$ and/or 2 - 4 % by mass of alkaline earth polyphosphate are used.

5. A process according to any one of Claims 1 to 3 inclusive, wherein, for the application of the dense amorphous silicate cover, about 20 % by mass of $SiO_2$ is used; for the antimony/silicic acid layer to be applied in one or more stages, about 4 % by mass of $Sb_2O_3$ and about 2 % by mass of $SiO_2$ are used; and for the final coating about 2 % by mass of $Al_2O_3$ and/or 3 % by mass of alkaline earth polyphosphate are used.

6. A process according to any one of Claims 1 to 3 inclusive, and Claim 5, wherein, for the final treatment with alkaline earth polyphosphates, calcium phosphates and/or barium phosphates on the basis of polyphosphates condensed in a chain-like manner are used, which phosphates are precipitated by the addition of aqueous solutions of alkaline earth metal salts and phosphates.

7. Temperature-stable and color-brilliant chrome yellow and molybdate red pigments having excellent fastness properties under the influence of light, weather, alkalis and acids, a high $SO_2$ resistance as well as strongly lowered acid-soluble lead contents, which, in addition to the usual stabilization components of metallic oxides and/or silicic acid, are also provided with a dense amorphous silicate cover in a quantity of 2 - 40 % by mass, one or more antimony oxide/silicic acid layers in a quantity of, in each case, 0.1 - 10 % by mass, preferably 2 - 5 % by mass, of $Sb_2O_3$ and 0.1 - 10 % by mass, preferably 1 - 3 % by mass, of $SiO_2$, as well as a final cover of aluminum oxide in a quantity of 0.1 to 10 % by mass, preferably 0.1 - 3 % by mass, of $Al_2O_3$, and/or an alkaline earth polyphosphate layer in a quantity of 0.1 - 10, preferably 2 - 4, % by mass of alkaline earth metal phosphate.

8. Use of the temperature-stable and color-brilliant chrome yellow and molybdate red pigments according to Claim 7 for the pigmentation of synthetic materials in particular coating materials and molding materials.

## Revendications

1. Procédé de préparation de pigments de chromate de plomb et de rouge de molybdène stables vis-à-vis de la température et de la lumière, dans lequel on applique au moins une fois un acide silicique, suivi d'une couche d'oxyde d'antimoine, sur un pigment de chromate de plomb ou de rouge de molybdène caractérisé en ce que, pour augmenter le brillant de la couleur, la résistance à $SO_2$, ainsi que les propriétés de solidité sous l'action de la température, de la lumière, des conditions atmosphériques, des alcalis et des acides, et pour diminuer les quantités de plomb solubles dans les acides, on applique la couche d'acide silicique sous la forme d'une enveloppe d'acide silicique dense et amorphe, contenant 2 à 40 % en poids de $SiO_2$ par rapport au poids du produit final à l'état sec, sur un pigment de chromate de plomb ou de rouge de molybdène préstabilisé de manière usuelle avec des oxydes métalliques et/ou de l'acide silicique, après quoi on applique une ou plusieurs couches d'oxyde d'antimoine et d'acide silicique contenant 0,1 à 10 % en poids de $Sb_2O_3$ et 0,1 à 10 % en poids de $SiO$ et enfin, on applique 0,1 à 10 % en poids d'oxyde d'aluminium et/ou 0,1 à 10 % en poids de polyphosphate alcalino-terreux.

2. Procédé selon la revendication 1, caractérisé en ce qu'on utilise, comme produit de départ, un pigment de chromate de plomb ou de rouge de molybdène préstabilisé de manière usuelle et connue avec des oxydes métalliques et de l'acide silicique, on lave ce produit pour le débarrasser des sels et ensuite, on utilise la pâte pigmentaire humide pour l'application de l'enveloppe de silicate dense et amorphe, après quoi on applique l'enveloppe d'oxyde d'antimoine et d'acide silicique et enfin, on applique des oxydes de métaux polyvalents et/ou un polyphosphate alcalino-terreux.

3. Procédé selon la revendication 1, caractérisé en ce qu'on filtre le pigment de chromate de plomb ou de rouge de molybdène lavé pour être débarrassé des sels et préstabilisé de manière usuelle avec des oxydes métalliques et de l'acide silicique, on le lave le produit de filtration pour le débarrasser des sels, on le sèche et ensuite, on garnit le pigment sec d'une enveloppe d'acide silicique dense et amorphe, après une nouvelle mise en suspension et dispersion, après quoi on charge de l'oxyde d'antimoine et de l'acide silicique en une ou plusieurs étapes, avec application finale d'oxydes métalliques et/ou de polyphosphates alcalino-terreux.

4. Procédé selon une des revendications 1 à 3, caractérisé en ce qu'on utilise 5-25 % en poids de $SiO_2$ pour l'application de la couche de silicate dense et amorphe, 2-5 % en poids de $Sb_2O_3$ et 1-3 % en poids de $SiO_2$ pour l'application de la couche d'oxyde d'antimoine et d'acide silicique à appliquer en une ou plusieurs étapes, ainsi que 0,1-3 % en poids d'$Al_2O_3$ et/ou 2-4 % en poids de polyphosphate alcalino-terreux pour l'application finale d'oxyde d'aluminium.

5. Procédé selon une des revendications 1 à 3, caractérisé en ce qu'on utilise environ 20 % en poids de $SiO_2$ pour l'application de la couche de silicate dense et amorphe, environ 4 % en poids de $Sb_2O_3$ et environ 2 % en poids de $SiO_2$ pour l'application de la couche d'oxyde d'antimoine et d'acide silicique à appliquer en une ou plusieurs étapes, ainsi qu'environ 2 % en poids d'$Al_2O_3$ et/ou 3 % en poids de polyphosphate alcalino-terreux pour l'application finale.

6. Procédé selon les revendications 1-3 et 5, caractérisé en ce qu'on utilise, pour le traitement final avec des polyphosphates alcalino-terreux, des polyphosphates de calcium et/ou de baryum à base de polyphosphates condensés en forme de chaîne, qui précipitent grâce à l'addition de solutions aqueuses de sels alcalino-terreux et de phosphates.

7. Pigments de chromate de plomb et de rouge de molybdène thermostables et de couleur brillante, ayant de très grandes propriétés de solidité sous l'action de la lumière, des conditions atmosphériques, des alcalis et des acides, une grande résistance vis-à-vis de $SO_2$, ainsi que des quantités de plomb solubles dans les acides qui sont très diminuées, caractérisés en ce qu'ils contiennent, en plus des composants usuels de stabilisation à base d'oxydes métalliques et/ou d'acide silicique, une enveloppe de silicate dense et amorphe à raison de 2-40 % en poids, une ou plusieurs couches d'oxyde d'antimoine et d'acide silicique respectivement à raison de 0,1-10 % en poids, de préférence 2-5 % en poids de $Sb_2O_3$ et 0,1-10 % en poids, de préférence 1-3 % en poids, de $SiO_2$, ainsi qu'une enveloppe finale d'oxyde d'aluminium à raison de 0,1 à 10 % en poids, de préférence 0,1-3 % en poids d'$Al_2O_3$ et/ou une couche de polyphosphate alcalino-terreux à raison de 0,1-10, de préférence 2-4, % en poids de phosphate alcalino-terreux.

8. Utilisation des pigments de chromate de plomb et de rouge de molybdène thermostables et de couleur brillante selon la revendication 7, pour la pigmentation de matières platiques, notamment de matières de revêtement et de matières moulables.